# EUROPEAN PATENT APPLICATION

(11) **EP 2 301 786 A1**
(43) Date of publication of application: **30.03.2011**
(21) Application number: 10176783.8
(22) Date of filing: 15.09.2010
(51) Int. Cl.: B60J 11/00

(54) **Waterproof bag**

(30) Priority: 16.09.2009 EP 09011802
(71) Applicant: IDD Solution OÜ, 11213 Tallinn (EE)
(72) Inventor: Sõrmus, Sven, 10119, Tallinn (EE); Peebu, Veljo, 11213, Tallinn (EE); Lusti, Raul, 63213, Põlva maakond (EE)
(74) Representative: Nelsas, Tónu

(57) **Abstract**

This invention concerns watertight ready-made or foldable storage bag suitable for preservation of items with various size and shape and protection of items against flood hazards. Bag of the invention includes in preferred embodiment the lower part in the main shape of cuboid made of watertight material, and the upper part, which upper edge is watertightly sealed with methods known from technical level. The bag of preferred embodiment is folded from planar form with suitable shape immediately before the need for preservation of the item, which is especially useful for space saving in case of large items. For smaller items the bag may be pre-folded, so that upon necessity the preserved item can be placed into it, closing the bag watertightly with its upper part. Dimensions of the bag may vary and depend on the dimensions of the item placed within. In this alternative option lower and upper parts of waterproof bag are separate parts, so that the lower part ensures complete watertightness of the item from below and from the sides, and upon flood situation also floatability of the item, while the tent of upper part ensures watertighness of the item against precipitation from above.

## Description

### Technical field

The present invention concerns waterproof bag for safe preservation of various items, especially in the regions of flood hazard, where there is need for partially or completely watertight bags/cases surrounding the items. Bag of the invention is suitable for preservation, storage and protection of following items/objects: vehicles such as cars, motorbikes, sleighs, bicycles etc, domestic equipment of various size such as technical domestic devices, furniture etc, foodstuff, books, documents, various data media, art valuables, tools, environmentally hazardous chemicals. Furthermore the bag of invention is suitable for packaging of military technical equipment, packaging of fresh water, compost.

### Background of the invention

US 2007176462 discloses an atmospheric and weather protection system for a vehicle where the lower protection panel extends underneath the vehicle and up along the sides and ends of the vehicle to be secured to the vehicle preferably by magnets and by drawstrings.

US 2006225822 discloses a portable flood-proof garage includes a plastic or rubber base trough, a plastic or rubber upper cover, an upper and lower zipper assembly, a waterproof seal zipper band, a suction tank, a longitudinal fastening belt and ring, a transverse fastening belt and ring as well as a stabilizing rope.

US 2006137384 discloses the flood and preservation device for preservation of items during floods. The product has self-opening carcass, which shall be activated as necessary. The device has rigid internal frame structure, which is completely surrounded by waterproof cover defining the space.

KR 20040027586 discloses method for production of container bag and container bag produced with this method, which has side walls, upper and lower side, whereby the bag has outer layer, intermediate layer and inner layer.

CN2818347 discloses watertight package bag, including box case and leak-proof bag placed in it, which upper edge has been connected with the upper edge of box case. The case is made of foldable material, which relevant parts are glued together to form the box.

### Summary of the invention

Object of this invention is to provide watertight and unsinkable ready-made or foldable storage bag, which is suitable for preservation of items with various size and shape and protection of items against flood hazards. Bag of the invention includes in preferred embodiment the lower part in the main shape of cuboid made of watertight material, covered by the upper part. The bag of preferred embodiment is foldable from planar form with suitable shape immediately before the need for preservation of the item, which is especially useful for space saving in case of large items. For smaller items the bag may be pre-folded, so that upon necessity the preserved item can be placed into it, closing the bag watertightly with its upper part. Dimensions of the bag may vary and depend on the dimensions of the item placed within. For example, the bag for storage, protection and/or preservation of painting has planar form designed specially for that purpose, so that two opposite side walls of the bag are essentially narrower than bordering side walls. The material of the bag can consist of a single layer or multiple layers. In case of the multiple layer material there can be one layer locating inside and/or outside from the waterproof layer made of net material. In a suitable accessible location there is a place for keeping list of items of the bag. Further the bag has one or more overpressure protective valves, whereby there is prevented possible fracture of the bag material because of excess pressure that can occur in the bag. The protective valves also enable to test the condition of the waterproof bag material in the case of reuse.

Preferred embodiment of the invention includes two options.

In case of the first option the upper edge of lower part of the bag is also the lower edge of upper part, in other words, lower and upper parts form integral whole, whereby upper edges of the upper part are foldable, in which result the upper side of the bag and thus the entire bag is watertightly (hermetically) closed with the methods known from thr prior art. In case of hermetical bag the bag is sealed using waterproof and/or pressureproof zipper. The bag that is hermetically sealable has overpressure protective valve and filling and testing valve. The hermetical bag can be filled with a gas. The valve that is installed to the hermetical bag enables deflating of the bag and the bag submerges.

In case of the second option lower and upper parts are mutually connected with non-hermetical flexible or nonflexible fixing details, whereby the upper part ensures watertightness of the item located in the bag against precipitation from above.

Bags of the second type are suitable for use in case of such items, which upon occurrence in water cause sufficient displacement to make them floating. In such case the bag need not to be made completely hermetically watertight, because the bag together with the item inside becomes floating upon certain water level and this ensures watertightness of the item from below.

In this alternative option lower and upper parts of waterproof bag are separate parts, so that the lower part ensures complete watertightness of the item from below and from the sides, and upon flood situation also floatability of the item, while the tent of upper part ensures watertighness of the item against precipitation from above. Such alternative option is suitable for preservation and protection of large motor vehicles and other large items, whereby it is equipped with stabilizers for balancing of overturning foce due to water flow and waves. Stabilizers also provide to the vehicle or any other large item the protection for avoiding of possible lateral collision damages, which may occur in case of flood situations. The stabilizers in their operating position also give the bag necessary shape in order to better surround the packed object. Stabilizers may be filled with gas, liquids or gel. Walls of the bag may be double or multiple, while the gap(s) between them may be similarly filled with stabilizers. Stabilizers may be located inside or outside the bag, but in case of the solution with double walls stabilizers may also be located between two layers. Watertight bag is equipped with fixing points for mutual connection of lower and upper part of the bag. Furthermore, this specific bag option is equipped with anchoring points (eyelets) for fixing of the bag to stationary constructions and to the packaged car or other vehicle. For fixing the bag to the car are used towing staples, wheels or other similar. For fixing the bag to other type of vehicles lacking the towing staples are used wheels or frame details. Such anchoring points are necessary for example in case of floods, in which case upon the rise of water level above certain height the vehicle located in watertight bag becomes floatable due to water displacement, and the bag might drift away with water flow. To prevent this, the bag is fixed to stationary constructions from anchoring points. At the same time the stabilizers ensure stability of the floating object and prevent its overturning and sinking.

Bottom of the bag of the invention may be made of reinforced material and walls of elastic material. The material used for the car bag is heatproof, waterproof and airtight. The bottom of the bag has in certain regions stregthened layer, which can be heatproof. In the case of two parts bag when testing the order of the bag for reuse the stabilizers/sections are filled with water.

### Brief description of the drawings

Preferred embodiment of the invention is described with references to the figures included, where:
FIG 1a-1c are side, bottom and perspective view of one preferred embodiment of the waterproof package of the invention;
FIG 2a-2d are side, end, bottom and perspective view of another preferred embodiment of the waterproof bag of the invention,
FIG 3 is side view of an alternative embodiment of the waterproof bag of the invention,
FIG 4 is one preferred option of the planar form of foldable waterproof bag of the invention.

### Realisation example of the invention

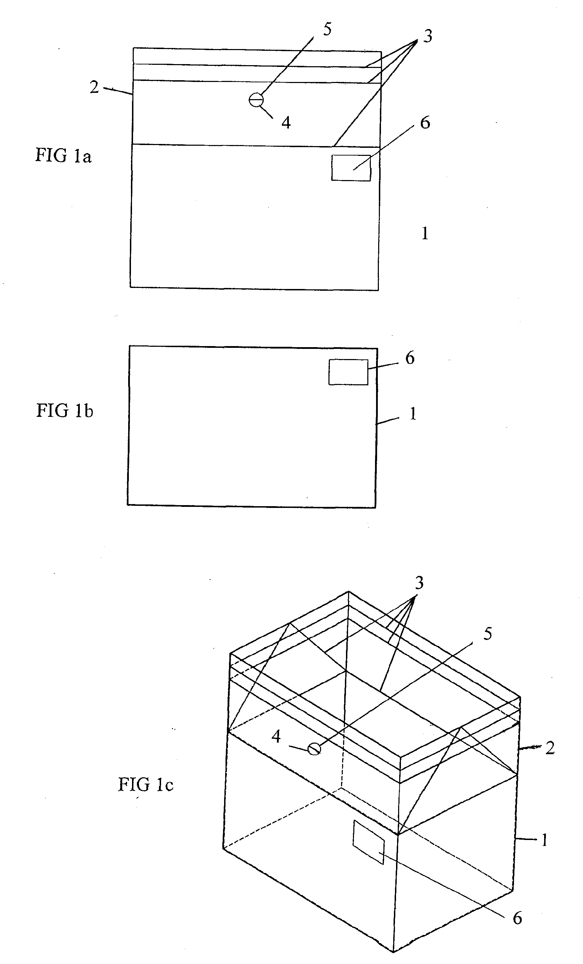

Waterproof bag of the invention (see FIG 1) includes lower part 1, which has bottom and side walls, and upper part 2, which upper side is watertight or hermetically sealable. In one preferred embodiment the upper part of the bag includes folding lines 3, along which the upper part of the bag shall be folded in watertight manner. In addition to folding the bag may be watertightly sealed with the help of other watertight connection details known from the technical level, for example using waterproof and/or pressureproof zipper. The bag further has filling and testing valve 4 along with overpressure protective valve 5. The overpressure protective valve 5 prevents possible fracture of the bag material because of excess pressure that can occur in the bag. The filling and testing valve 4 enables testing the order of the waterproof material of the bag in the case of reuse of the bag. The hermetical bag can be filled with a gas. The protective valve 5 that is installed to the hermetical bag enables deflating of the bag and the bag submerges.

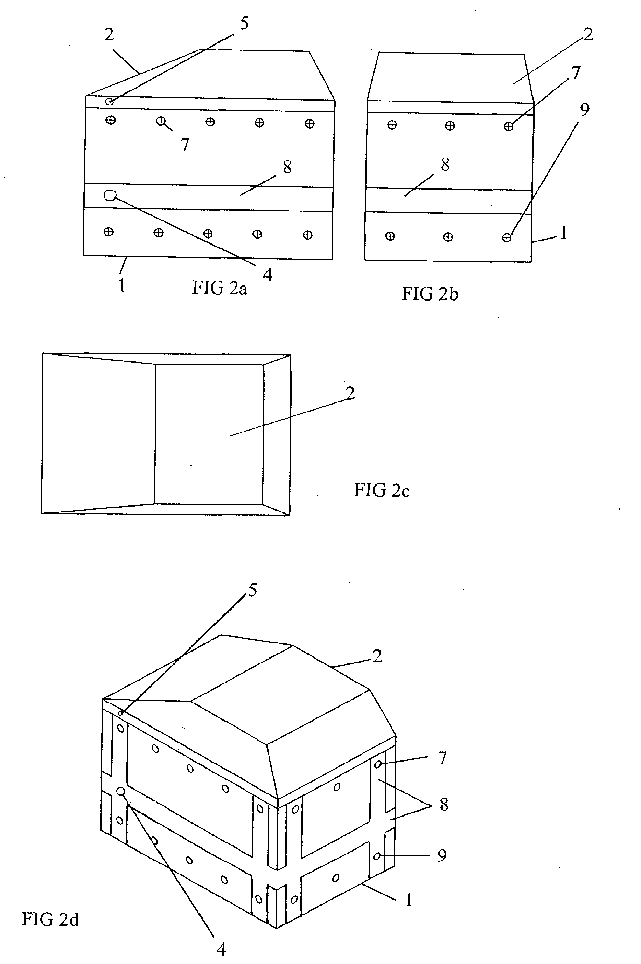

Figures FIG 2a-2d show an alternative option of the waterproof bag of the invention for preservation of large object (e.g. car), which due to its construction has sufficient water displacement ability to make the object floatable in case of occurrence in water upon certain water level. As in such case the storage bag shall not be completely hermetical, to ensure watertightness of the object, lower part 1 and upper part 2 of this alternative bag are mutually connected with non-hermetical fixing details 6, which in the preferred embodiment are, but not limiting, flexible. In the preferred embodiment the fixing details are 12 flexible belts. Upon rise of water level above certain level the mentioned storage bag shall become floatable together with the object inside. For lateral stabilisation of the floating bag and the object located inside, and protection of the object against possible damages caused during lateral movement, the bag has at least one stabilizer 7 and there are anchoring means 8 in the lower part of the lower part 1 exactly opposite at the inner and outer side of the bag for fixing of the bag. In the preferred embodiment the anchoring means are eyelets to which can be attached cords for fixing the object and the bag. The other ends of the cords tied to the eyelets locating at the inner side of the bag are attached to the packed car or other vehicle. For fixing the inner cords to the car is used towing staples, wheels or other similar. For fixing the bag to other type of vehicles lacking the towing staples are used wheels or frame details. The other ends of the cords tied to the eyelets locating at the outer side of the bag are attached to nearby stationar objects like poles, stakes or other similar. Such anchoring places are necessary in case of floods, where the rise of the water level over a certain height the vehicle in the bag become floating and there is danger that the bag with the object can drift away. At the same time the stabilizers guarantee the stability of the floating object and prevent its turning upside down and sinking.

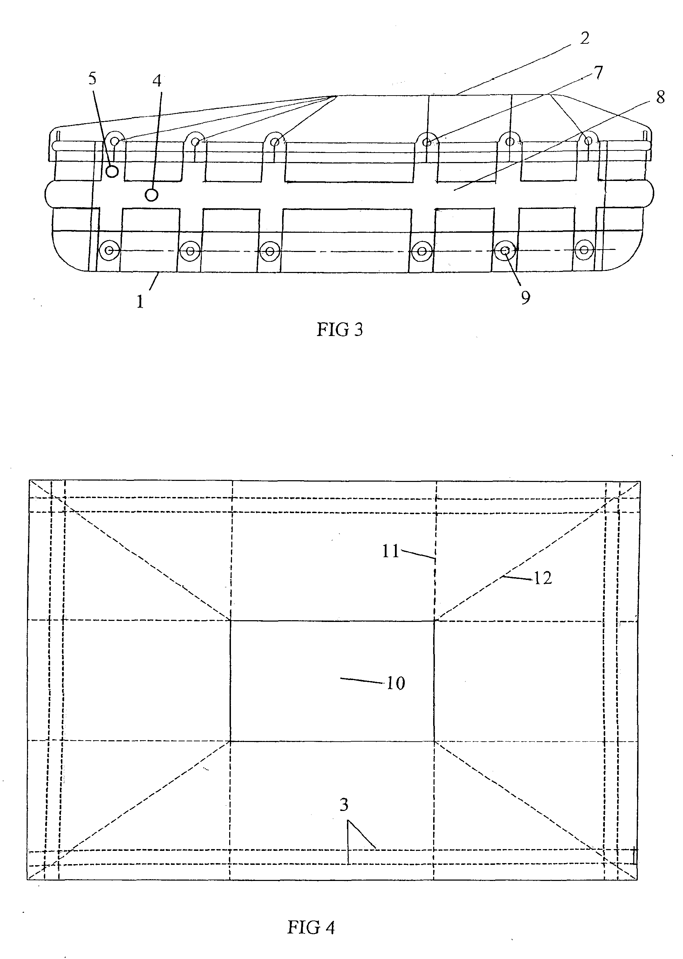

Figure FIG 3 shows one special solution of the bag of figures FIG 2a-2d, where the shapes of lower and upper parts are made in compliance with outer shape of the object surrounded by the bag (in this case, car). The bag consists of two parts, watertight and floatable lower part 1 and upper part 2 covering the lower part in watertight manner.

One preferred planar area form of the material of the bag (see FIG 4) includes bottom part 9 of the bag, which corners are starting points for one folding lines 10 perpendicular to the edges of side walls and the second folding lines 11 to the corners of the planar form. The third folding lines 12 run in parallel near outer edge of the planar form. In an alternative option the planar form of the bag is made of watertight material and can be glued together along the edges of planar form.

## Claims

1. Waterproof bag made of watertight material, consisting of watertight lower part (1), watertight upper part (2), **characterized in, that** lower part of the bag is made of one integral planar form made of watertight material which is folded along folding lines or is glued together the edges of the planar form, the upper part (2) covering lower part (1) of the bag is folded from the upper edge of lower part of the bag and the upper side of the bag is hermetically sealed by folded egdes of the upper side; or the upper part (2) covering lower part (1) of the bag is connected with the lower part (1) with fixing details (4), the lower part of the bag (1) is equipped with at least one stabilizer (8), which has one or more overpressure protective valve (5) and filling and testing valve (4), in the lower part of the bag (1) at the inner side and the outer side are anchoring means (8) so that the anchoring means (8) in the inner side are adjacent to the anchoring means (8) in the outer side, whereby anchoring means (6) are connected at the inner side of the bag (1) to the towing staples, wheels or other frame details of the vehicle by the cords and the anchoring means (6) are connected at the outer side of the bag (1) to the to the stationary objects by cords and other similar.

2. Waterproof bag made of watertight material according to claim 1, **characterized in, that** upper edges of opposite side walls of the bag are folded along folding lines for hermetical sealing of the bag for example by waterproof and/or pressureproof zipper, whereby the hermetically sealed bag can be filled with a gas or contain vacuum.

3. Waterproof bag made of watertight material according to claim 1, **characterized in, that** stabilizer (8) includes one substance or any combination of the following list of substances: gas or mixture of gases, gel, water, substance or its aqueous solution.

4. Waterproof bag made of watertight material according to claim 1, **characterized in, that** bottom of the bag or part of it is made of reinforced material which can be of heatproof/fireproof material.

5. Waterproof bag made of watertight material according to claim 1, **characterized in, that** walls of the bag are made of elastic material.

6. Waterproof bag made of watertight material according to any preceding claim, **characterized in, that** side walls of the bag are double-layer or multi-layer.

7. Waterproof bag made of watertight material according to any preceding claim, **characterized in, that** one layer locating inside and/or outside from the waterproof layer is made of net material.

8. Waterproof bag made of watertight material according to any preceding claim, **characterized in, that** one or several stabilizers (8) are placed between the double-layer or multi-layer side walls.

9. Waterproof bag made of watertight material according to any preceding claim, **characterized in, that** in a suitable accessible location there is a place for keeping list of items of the bag.
